# EUROPEAN PATENT APPLICATION

(11) **EP 2 068 154 A2**
(43) Date of publication of application: **10.06.2009**
(21) Application number: 08020466.2
(22) Date of filing: 25.11.2008
(51) Int. Cl.: G01N 35/02

(54) **Automated analyzer**

(30) Priority: 07.12.2007 JP 2007316506
(71) Applicant: Hitachi High-Technologies Corporation, Minato-ku Tokyo 105-8717 (JP)
(72) Inventor: Hamazumi, Yuko, Tokyo, 105-8717 (JP); Mimura, Tomonori, Hitachinaka-shi Ibaraki 312-8504 (JP)
(74) Representative: Strehl Schübel-Hopf & Partner

(57) **Abstract**

Disclosed herein are an automated analyzer with a sample pretreatment disk and a method of operating the sample pretreatment disk which are designed not to decrease the processing capability of the automated analyzer during sample pretreatments such as sample dispensing and diluent dispensing. The automated analyzer can be applied to any clinical assay involving biological sample analyses.

The sample pretreatment disk has two operational cycles: a sample pretreatment cycle and a sample re-sampling cycle. The sample pretreatment cycle is a cycle A during which the pretreatment disk rotates so that pretreatment operations are performed on some pretreatment vessels placed on the pretreatment disk. The re-sampling cycle is a cycle B during which the pretreatment disk rotates so that a pretreated sample is transferred from a pretreatment vessel on the pretreatment disk into a reaction vessel on a reaction disk, which disk is part of the analysis section of the automated analyzer.

Controlling the cycles A and B independently of each other allows re-sampling operations to be performed without a series of pretreatment operations interrupted.

## Description

### BACKGROUND OF THE INVENTION

### 1. Field of the Invention

The present invention relates to automated analyzers that qualitatively and quantitatively analyze biological samples such as blood and urine and more particularly to an automated analyzer with a sample pretreatment mechanism that performs pretreatments, such as dilution or the like, on a sample before analysis.

### 2. Description of the Related Art

Automated analyzers that qualitatively and quantitatively analyze biological samples such as blood and urine may be unable to accurately measure the samples when the concentrations of the samples are high enough to exceed the measurable ranges of measurement instruments of the analyzers. In such a case, those samples are diluted for re-measurement. There are two methods associated with such sample dilution. One is to dilute a sample in a reaction vessel; the other is to dilute a sample in a vessel other than the reaction vessel which is exclusively used for the dilution purpose. As one of the latter methods, JP-A-05-80059 discloses an automated analyzer with a pretreatment disk that performs a pretreatment on a sample before analysis.

### SUMMARY OF THE INVENTION

The pretreatment disk of the automated analyzer disclosed in JP-A-05-80059 rotates such that the operations performed for a particular pretreatment vessel placed on the pretreatment disk proceed in the following order: rinsing a pretreatment vessel (hereinafter also referred to as a dilution vessel); dispensing a sample into the pretreatment vessel; dispensing a diluent into the pretreatment vessel; and dispensing the diluted sample into a reaction vessel. Also, during one cycle of the pretreatment disk which spans 6 seconds, the pretreatment disk rotates 360 degrees plus N degrees, wherein N is the number obtained by dividing one by the total number of pretreatment vessels.

Such an automated analyzer has the following two drawbacks.

The first is decrease in the processing capability of the automated analyzer. Although the pretreatment disk rotates during each cycle, it has to stop at a certain position when a diluted sample needs to be dispensed into multiple reaction vessels for multiple-attribute analysis of the sample. During this period, the pretreatment disk stays at that position until all the dispensing operations are complete. No dilution and rinsing operation can be performed for other pretreatment vessels during the period, which may result in a decrease in the processing capability of the automated analyzer.

The second is the inability of the analyzer to control its pretreatment time. When such attributes of a sample as its enzymes and proteins are to be analyzed, that analysis can be made as soon as the sample is diluted at a particular rate. In contrast, measurement of glycosylated hemoglobin (Hb_{Alc}), which is contained in red blood cells in a blood sample, requires the sample, after diluted, to be left untreated for a certain amount of time or heated at a fixed temperature. Specifically, the sample has to be put on standby for measurement until its red blood cells are hemolyzed (broken down due to osmosis) to free hemoglobin and the like from the blood cells. Because the pretreatment disk of the automated analyzer disclosed in JP-A-05-80059 always rotates cyclically, this is efficient when the same pretreatment time is required for each sample. However, when there are samples with different pretreatment times, the analysis efficiency of the automated analyzer may decrease.

An object of the present invention is thus to provide an automated analyzer with a sample pretreatment device which can operates smoothly under various analysis conditions.

To achieve the above object, the present invention is configured as follows:
An automated analyzer comprises:
   a sample vessel for containing a sample therein;
   a plurality of pretreatment vessels in which a sample is subjected to pretreatments;
   a reaction vessel in which a sample is reacted with a reagent;
   a pretreatment mechanism for performing the pretreatments when necessary on a sample before the sample is transferred from the sample vessel to the reaction vessel, the pretreatment mechanism having a pretreatment-vessel transfer mechanism for circulating the plurality of pretreatment vessels on a closed track, wherein while circulating the plurality of pretreatment vessels on the closed track, the pretreatment-vessel transfer mechanism alternates a first cycle during which a sample is transferred from the sample vessel to one of the plurality of pretreatment vessels and a second cycle during which a sample that completed the pretreatments is transferred from one of the plurality of pretreatment vessels to the reaction vessel; and
   control means for controlling the pretreatment-vessel transfer mechanism such that the pretreatment-vessel transfer mechanism transfers a predetermined number of the plurality of pretreatment vessels on the closed track during the first cycle and such that the pretreatment-vessel transfer mechanism operates the second cycle when a sample that completed the pretreatments is in one of the plurality of pretreatment vessels.

The word 'sample' as used herein is also referred to as an analyte or specimen and refers to biological samples such as blood and urine. The 'sample vessels' can be of any form including test tubes, cuvettes, and small cups as long as it is capable of containing a sample. The sample vessels can be placed on the circumference of a circular sample disk or on a sample rack that can place thereon one or more sample vessels. The 'reaction vessels' refer to vessels in which a sample and reagent are mixed for analysis. Representative analyses include colorimetric analysis, in which a reaction is detected by a change in the color of liquid, and immunoanalysis and gene analysis, in which a sample to be analyzed is reacted with a reagent that bonds specifically to the sample, and a labeled substance in the resultant bonded substance is measured in terms of luminance. The automated analyzer of the present invention can be applied to the above analyses and to any kind of analysis other than the above.

Means for transferring a sample from a sample vessel into a pretreatment vessel and means for transferring a pretreated sample from a pretreatment vessel into a reaction vessel can be pressure-generating devices such as a syringe, diaphragm, and vacuum pump. Any widely-used liquid dispensing probe, which changes the pressure inside its nozzle to suction a liquid into the nozzle and dispense it out from the nozzle, can be used for those means as long as it is capable of transferring a liquid.

The 'pretreatment-vessel transfer mechanism' can be of any form as long as pretreatment vessels can be transferred on a closed or endless track. A representative example is a disk-shaped rotating mechanism. The pretreatment-vessel transfer mechanism can also be a circular carousel having a closed moving belt for transferring pretreatment vessels thereon.

The 'first and second cycles' refer to periods during which the pretreatment-vessel transfer mechanism, or the pretreatment disk, rotates to transfer pretreatment vessels. For example, during each of the first cycle, the pretreatment disk rotates such that five pretreatment vessels are transferred unidirectionally (clockwise or counterclockwise). In contrast, during each of the second cycle, the pretreatment disk rotates seemingly randomly. Since the second cycle is a period during which a pretreated sample in a pretreatment vessel placed on the pretreatment disk is transferred to a reaction vessel, it can be a period during which no operation is performed when there is no pretreated sample to be transferred. Also, a pretreated sample in a pretreatment vessel may be transferred to several reaction vessels during several second cycles in the case of multiple-attribute biochemical analysis. The present invention is distinctive in the above respect: that is, regular and (seemingly) random rotational movements of the pretreatment disk are repeated. The repetition can be an alternation of regular movement and random movement or an alternation in which a regular movement is repeated several times and then followed by a repetition of a random movement several times.

The effects produced by the present invention are the following:
1) The automated analyzer of the invention is less subject to decrease in its processing capability due to pretreatments. This is because the automated analyzer is capable of continuing analysis while keeping on the pretreatment (dilution) disk a particular sample that is put on standby for re-analysis.
2) When samples, after diluted, need be left untreated for a certain amount of time or heated at a fixed temperature for a certain amount of time as a pretreatment, that amount of time can be changed as desired. Therefore, the automated analyzer can analyze samples smoothly also when they need hemolytic treatment as a pretreatment.

### BRIEF DESCRIPTION OF THE DRAWINGS

Other objects and advantages of the invention will become apparent from the following description of embodiments with reference to the accompanying drawings in which:
FIG. 1 illustrates an automated biochemical analyzer according to an embodiment of the present invention;
FIG. 2 shows the alternate operation of cycles A and B according to the invention;
FIG. 3 shows the operations performed during cycles A and B as pretreatments according to the embodiment of the invention in the case of single-attribute biochemical analysis in which samples, after diluted, need not be left untreated for a certain amount of time or need not be heated at a fixed temperature;
FIG. 4 shows the operations performed during cycles A and B as pretreatments according to the embodiment of the invention in the case of multiple-attribute biochemical analysis in which samples, after diluted, need not be left untreated for a certain amount of time or need not be heated at a fixed temperature;
FIG. 5 shows the operations performed during cycles A and B as pretreatments according to the embodiment of the invention when samples, after diluted, need be left untreated for a certain amount of time or need be heated at a fixed temperature;
FIG. 6 illustrates pretreatment positions on the dilution disk of the automated analyzer according to the embodiment of the invention when twenty dilution vessels are on the dilution disk, particularly showing the position at which a sample is dispensed into a dilution vessel during a cycle A;
FIG. 7 illustrates pretreatment positions on the dilution disk according to the embodiment of the invention when twenty dilution vessels are on the dilution disk, particularly showing the position of the dilution disk in the next cycle A after the cycle A of FIG. 6;
FIG. 8 illustrates pretreatment positions on the dilution disk according to the embodiment of the invention when twenty dilution vessels are on the dilution disk, particularly showing the position of the dilution disk in the next cycle A after the cycle A of FIG. 7;
FIG. 9 illustrates pretreatment positions on the dilution disk according to the embodiment of the invention when twenty dilution vessels are on the dilution disk, particularly showing the position of the dilution disk in the cycle B during which the sample that is dispensed in FIG. 6 is re-sampled into a reaction vessel;
FIG. 10 illustrates pretreatment positions on the dilution disk according to the embodiment of the invention when twenty dilution vessels are on the dilution disk, particularly showing the position of the dilution disk in the next cycle A after the cycle A of FIG. 8;
FIG. 11 illustrates pretreatment positions on the dilution disk according to the embodiment of the invention when twenty dilution vessels are on the dilution disk, particularly showing the position of the dilution disk in the cycle B during which the sample that is dispensed in FIG. 7 is re-sampled into a reaction vessel;
FIG. 12 illustrates pretreatment positions on the dilution disk according to the embodiment of the invention when twenty dilution vessels are on the dilution disk, particularly showing the position of the dilution disk in the cycle B during which the sample that is dispensed in FIG. 6 is re-sampled again for reanalysis into a reaction vessel;
FIG. 13 illustrates the rotational movement of the dilution disk during cycles A according to the embodiment of the invention;
FIG. 14 illustrates the rotational movement of the dilution disk during cycles B according to the embodiment of the invention; and
FIG. 15 is a flowchart showing the process flow of a particular pretreatment vessel according to the embodiment of the invention.

### DESCRIPTION OF THE PREFERRED EMBODIMENTS

The features of the present invention are briefly described below.

Configuring the system control of an automated analyzer based on sample dilution cycles affects the processing capability of the automated analyzer during re-sampling. To avoid this, the automated analyzer according to the present invention adopts two-cycle system control in which one cycle is a sample dilution cycle (hereinafter referred to as a cycle A), and the other is a sample re-sampling cycle (hereinafter referred to as a cycle B). These cycles A and B are designed to operate alternately. Hereinafter, the automated analyzer of the present invention is described in which the analyzer performs sample dilution as a pretreatment. However, the automated analyzer according to the invention can be applied to any pretreatment-automated analyzer as long as it analyzes biological samples.

Performed during cycles A are a series of dilution operations including: rinsing a dilution vessel; dispensing an original sample into a dilution vessel; dispensing a diluent into a dilution vessel; and stirring a sample and diluent in a dilution vessel. These operations are concurrently performed on some of the dilution vessels placed on the dilution disk of the analyzer during one cycle A, and each of the operations is performed by respective mechanisms, such as a sampling probe and a diluent dispensing probe, disposed at particular positions around the dilution disk.

Performed during cycles B is the operation of moving a dilution vessel containing a diluted sample into a re-sampling position, where the sample is re-sampled (dispensed) into a reaction vessel.

During cycles A, the dilution disk rotates regularly such that when a particular dilution vessel completes the above series of dilution operations during cycles A, the next dilution vessel to be subjected to the series of dilution operations is either of the dilution vessels counterclockwise-adjacent or clockwise-adjacent to that dilution vessel.

During cycles B, the dilution disk rotates such that a dilution vessel containing a diluted sample is transferred to a particular position for re-sampling.

As stated above, cycles A and B operate alternately. During the transition from a cycle A to a cycle B, a dilution vessel that contains a diluted sample and is to be subjected to a re-sampling operation next is moved to the re-sampling position wherever on the dilution disk that dilution vessel is located. In such a case, the dilution disk is to select a clockwise or counterclockwise rotation, whereby the transfer of the dilution vessel takes the shortest route from the position of that vessel to the re-sampling position.

Described next is the transition from a cycle B to a cycle A.

As stated above, during cycles A, a series of dilution operations are regularly performed. During the transition from a cycle B to a cycle A, the dilution disk rotates such that a particular dilution vessel that completed a certain dilution operation during the preceding cycle A is subjected to the next dilution operation during the next cycle A. Assume, for example, that an original sample is dispensed into a particular dilution vessel during the preceding cycle A, and a cycle B begins. Then, that particular dilution vessel moves to a diluent dispensing position in the next cycle A.

In the automated analyzer of the present invention, during cycles A, dilution vessels placed on the dilution disk are sequentially subjected to a series of dilution operations with the dilution disk rotated, and cycles A and B are independent of each other. Therefore, re-sampling a diluted sample from a dilution vessel on the dilution disk into a reaction vessel on a reaction disk can be performed without stopping the series of dilution operations. Further, also in a multiple-attribute biochemical analysis in which a diluted sample is re-sampled several times into reaction vessels, dilution operations can be performed sequentially during cycles A although the dilution disk stays at one position during cycles B. In the case of a biochemical analysis in which samples, after diluted, need be left untreated for a certain amount of time or heated at a fixed temperature, cycles B are controlled not to operate until a predetermined amount of time passes. Also in cycles A during this period, dilution operations can be performed on dilution vessels one after another.

A preferred embodiment of the present invention is described below with reference to the accompanying drawings.

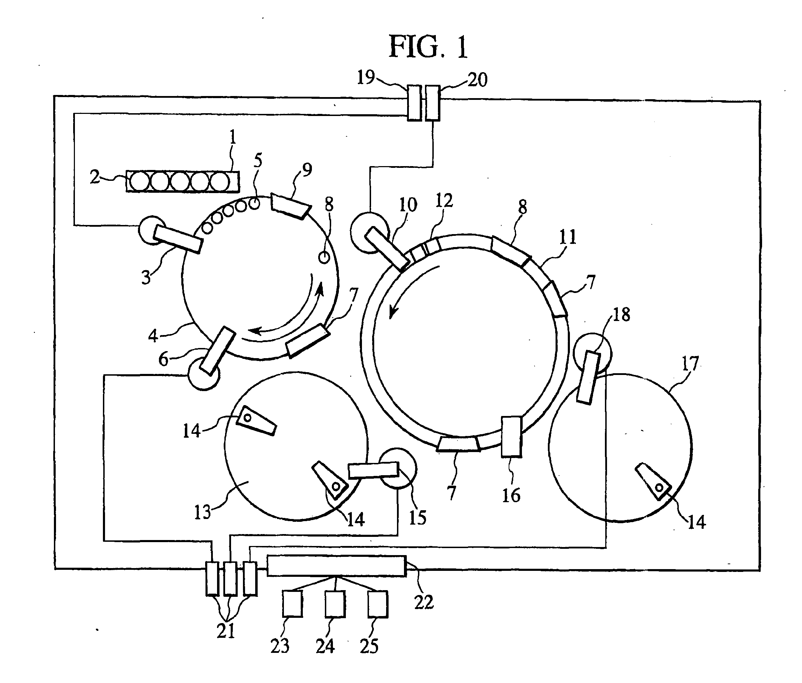

FIG. 1 illustrates the overall configuration of an automated analyzer according to the embodiment of the invention. Shown in FIG. 1 are the following components: a sample rack 1; sample vessels 2; a sampling probe 3; a dilution disk 4; dilution vessels 5; a diluent-dispensing probe 6; a stirring mechanism 7; a re-sampling position 8; a rinsing mechanism 9; a re-sampling probe 10; a reaction disk 11; reaction vessels 12; a first reagent disk 13; reagent bottles 14; a first-reagent dispensing probe 15; a photometric instrument 16; a second reagent disk 17; a second-reagent dispensing probe 18; a sampling mechanism 19; a re-sampling mechanism 20; diluent and reagent dispensing mechanisms 21; a control unit 22; a display unit 23; an input unit 24; and a memory unit 25.

A biological sample is first dispensed into the sample vessels 2, and the sample rack 1 containing the sample vessels 2 is moved closer to the sampling probe 3. The biological sample is then dispensed into one of the dilution vessels 5 on the dilution disk 4 by the sampling probe 3. After diluted, the sample is moved to the re-sampling position 8, where it is sampled again into one of the reaction vessels 12 on the reaction disk 11 by the re-sampling probe 10.

Since the invention pertains to increased efficiency in pretreatments from sampling to re-sampling, described hereinafter is the operation of the automated analyzer (specifically, the operation of the dilution disk 4) during the pretreatments from sampling up to re-sampling.

### 1-1. Alternate operation of cycles A and B

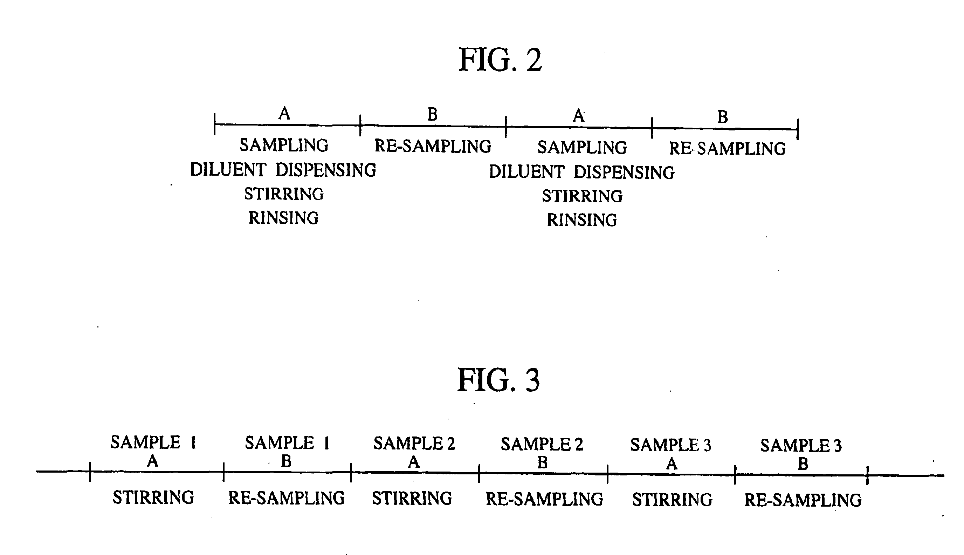

FIG. 2 shows how pretreatment cycles, or cycles A and B, operate.

During each cycle A, the following steps are concurrently performed on dilution vessels 5 placed on the dilution disk 4: sampling an original sample into a dilution vessel; dispensing a diluent into a dilution vessel; stirring a sample and diluent in a dilution vessel; and rinsing a dilution vessel. During each cycle B, only the step of dispensing a diluted sample into a reaction vessel is performed. Cycles A and B are controlled independently of each other and operate alternately. Note that the operations performed for a particular dilution vessel on the dilution disk 4 proceed in the following order.
Sampling → Diluent dispensing → Stirring → Re-sampling → Standby for reanalysis → Rinsing

### [In the case of single-attribute biochemical analysis in which samples, after diluted, need not be left untreated for a certain amount of time or need not be heated at a fixed temperature as a pretreatment, i.e., samples need only be diluted as a pretreatment]

As stated above, performed during each cycle A are the steps of sampling an original sample into a dilution vessel, dispensing a diluent into a dilution vessel, stirring a sample and diluent in a dilution vessel, etc.. However, performed during each cycle B is only the step of dispensing a diluted sample into a reaction vessel, and a cycle B does not operate until the first sample dispensed into a dilution vessel is mixed with a diluent and becomes ready for re-sampling; that is, a cycle B operates only when there is a sample available for re-sampling. When a sample, after diluted, need not be left untreated for a certain amount of time or need not be heated at a fixed temperature, that sample is re-sampled into a reaction vessel during the next cycle B immediately after that sample is stirred. As shown in FIG. 3, in single-attribute biochemical analysis, samples that completed stirring during their respective cycles A are sequentially re-sampled in their respective next cycles B.

### Example of operations performed during cycles A and B

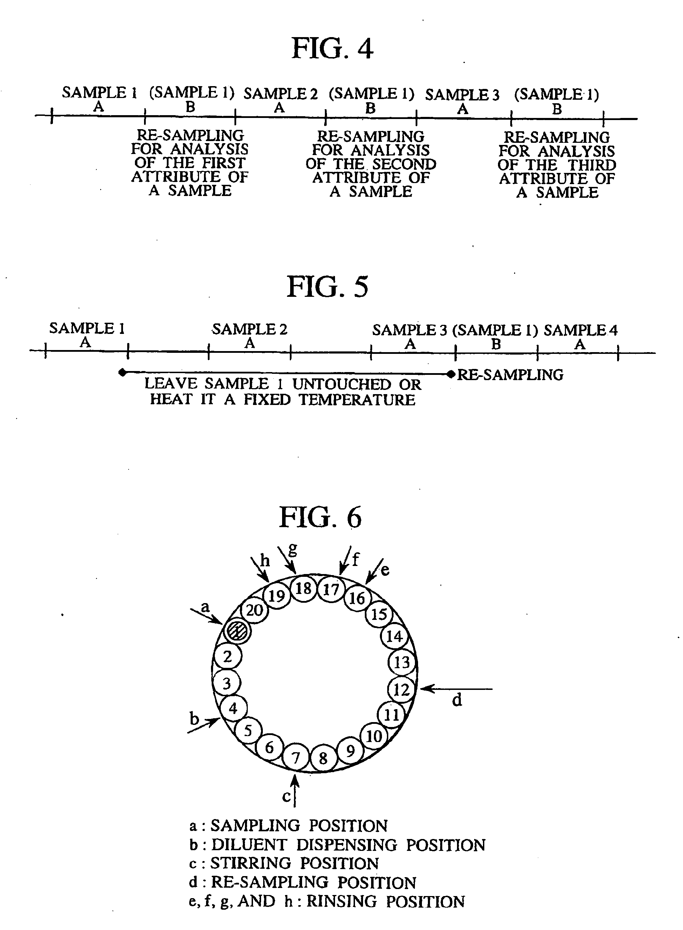

The following example is based on the assumption that twenty dilution vessels are on the dilution disk 4, and during cycles A, the dilution disk 4 rotates such that pretreatments are performed on every third dilution vessel, which means, with reference to FIG. 6, the order in which dilution vessels complete all the pretreatments is from dilution vessel #1, #18, #15, #12, #9, #6, #3, #20, #17, #14, #11, #8, #5, #2, #19, #16, #13, #10, #7 to #4.

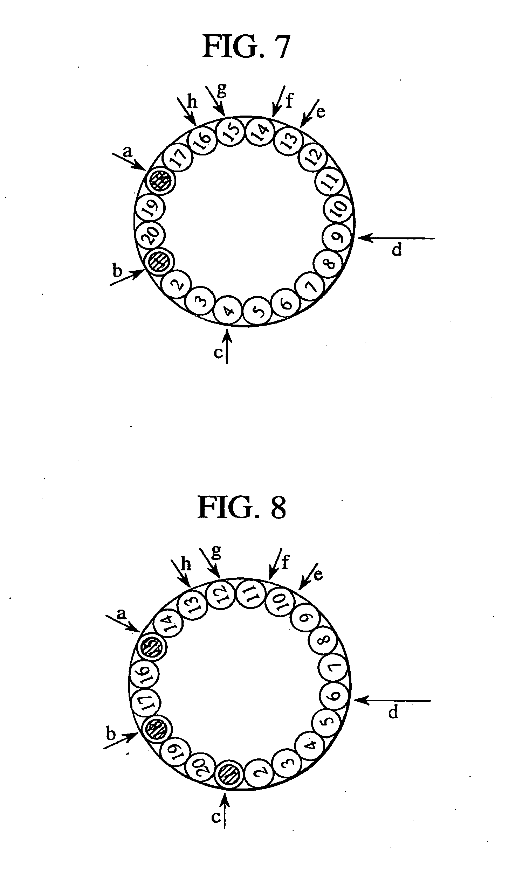

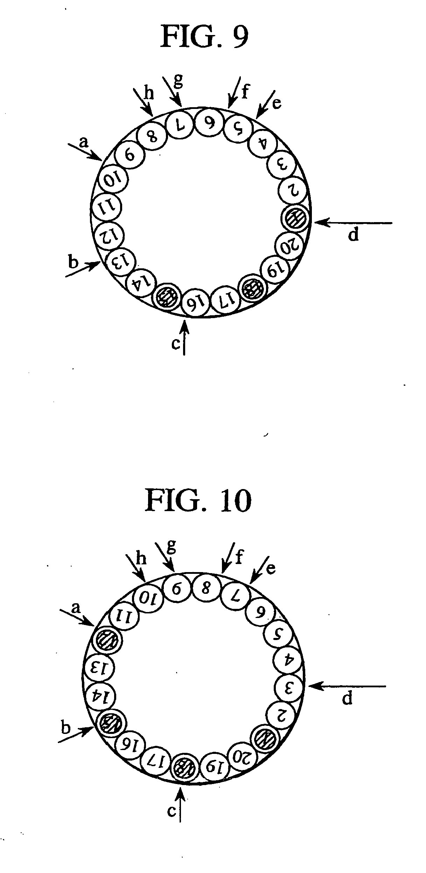

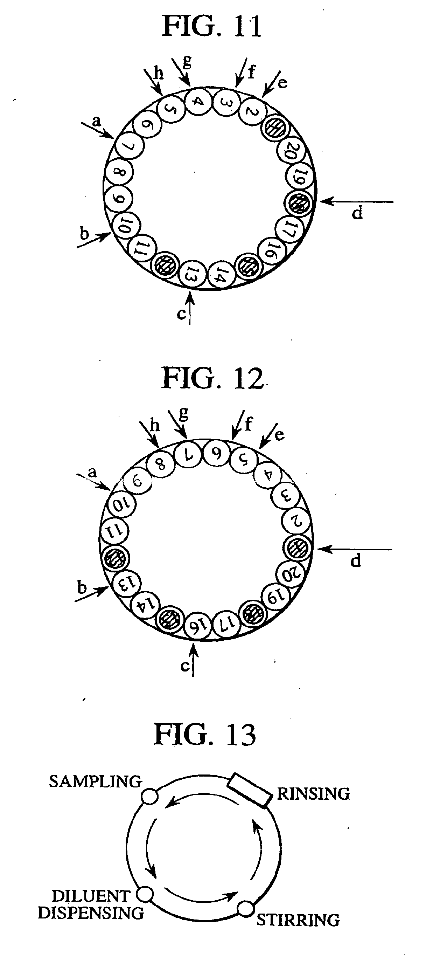

Referring to FIG. 6, reference symbol 'a' denotes the position at which an original sample is sampled into a dilution vessel, 'b' denotes the position at which a diluent is put into a dilution vessel that contains a sample, 'c' denotes the position at which a sample and diluent are stirred in a dilution disk, 'd' denotes the position at which a diluted sample contained in a dilution vessel is re-sampled into a reaction vessel, and 'e,' 'f,' 'g,' and 'h' denote the positions at which a dilution vessel is rinsed. With that stated, the operations performed during cycles A and B can be summarized as below.
· During the first cycle A, an original sample is sampled into dilution vessel #1.
· During the first cycle B, no operation is performed because there is no sample available for re-resampling right after the first cycle A.
· During the second cycle A, dilution vessel #1 moves to the diluent dispensing position b, as shown in FIG. 7, where a diluent is dispensed into dilution vessel #1. At the same time, the original sample is sampled into dilution vessel #18 at the sampling position a.
· During the second cycle B, too, no operation is performed since there is no sample available for re-sampling, as in the first cycle B.
· During the third cycle A, dilution vessel #1 moves to the stirring position c, as shown in FIG. 8, where the sample and diluent contained in dilution vessel #1 are stirred. At the same time, a diluent is dispensed into dilution vessel #18 at the diluent dispensing position b, and the original sample is sampled into dilution vessel #15 at the sampling position a.
· During the third cycle B, dilution vessel #1, in which the sample has been diluted, moves to the re-sampling position d, as shown in FIG. 9, if it does not require a further pretreatment such as incubation or the like. At the re-sampling position d, the diluted sample contained in dilution vessel #1 is re-sampled into a reaction vessel. The movement of dilution vessel #1 from the stirring position c to the re-sampling position d is a counterclockwise movement, which is the shortest way to the re-sampling position d.
· During the fourth cycle A, dilution vessel #18 moves to the stirring position c, as shown in FIG. 10, where the sample and diluent contained in dilution vessel #18 are stirred. This movement of dilution vessel #18 caused by the rotation of the dilution disk 4 is a clockwise movement, which is the shortest way to the stirring position c. Further, a diluent is dispensed into dilution vessel #15 at the diluent dispensing position b, and the original sample is sampled into dilution vessel #12 at the sampling position a. During this fourth cycle A, the remaining sample in dilution vessel #1 that has completed re-sampling is kept in that vessel until it is determined whether the sample needs to be re-analyzed or not.
· During the fourth cycle B, dilution vessel #18 moves from the stirring position c to the re-sampling position d for re-sampling, as shown in FIG. 11, when the sample contained in dilution vessel #18 is required to be re-sampled into a reaction vessel.

As stated above, during cycles A, the dilution disk 4 rotates such that pretreatments are performed on every third dilution vessel. This means that after the dilution disk 4 completes a 360-degree rotation, alternating cycles A and B, the next dilution vessel into which the original sample is sampled is dilution vessel #20, which is clockwise-adjacent to dilution vessel #1, or the vessel into which the original sample is dispensed first.

### [In the case of multiple-attribute biochemical analysis in which samples, after diluted, need not be left untreated for a certain amount of time or need not be heated at a fixed temperature as a pretreatment, i.e., samples need only be diluted as a pretreatment]

As stated above, performed during each cycle A are the steps of sampling an original sample into a dilution vessel, dispensing a diluent into a dilution vessel, stirring a sample and diluent in a dilution vessel, etc.. However, performed during each cycle B is only the step of dispensing a diluted sample into a reaction vessel, and a cycle B does not operate until the first sample dispensed into a dilution vessel is mixed with a diluent and becomes ready for re-sampling; that is, a cycle B operates only when there is a sample available for re-sampling. When a sample, after diluted, need not be left untreated for a certain amount of time or need not be heated at a fixed temperature, that sample is re-sampled into a reaction vessel during the next cycle B immediately after that sample is stirred. When multiple attributes of a sample is to be analyzed, that is, when that sample needs to be re-sampled several times, that sample is re-sampled in as many cycles B as necessary, as shown in FIG. 4. In this case, during the respective cycles A of FIG. 4, pretreatment operations, such as dispensing a sample into a dilution vessel and the like, are also performed while the same dilution vessel is subjected to re-sampling operations during several cycles B.

Similar to the single-attribute biochemical analysis described above, the following example of multiple-attribute biochemical analysis is also based on the assumption that twenty dilution vessels are on the dilution disk 4, and during cycles A, the dilution disk 4 rotates such that pretreatments are performed on every third dilution vessel.

The multiple-attribute analysis of a sample is the same as the single-attribute analysis except for the subsequent operations performed after the operation in FIG. 10. That is, also in the multiple-attribute analysis, dilution vessels placed on the dilution disk 4 are subjected to the operations of FIG. 6 through FIG. 10. More specifically, those operations consist, as stated above, of sampling into dilution vessel #1 during the first cycle A (FIG. 6); diluent dispensing into dilution vessel #1 and sampling into dilution vessel #18 during the second cycle A (FIG. 7); stirring in dilution vessel #1, diluent dispensing into dilution vessel #18, and sampling into dilution vessel #15 during the third cycle A (FIG. 8); re-sampling from dilution vessel #1 during the third cycle B (FIG. 9); and stirring in dilution vessel #18, diluent dispensing into dilution vessel #15, and sampling into dilution vessel #12 during the fourth cycle A (FIG. 10). During the next (fourth) cycle B, which is different from the single-attribute analysis, dilution vessel #1 moves again to the re-sampling position d, as shown in FIG. 12, where the sample in dilution vessel #1 is re-sampled again into a reaction vessel for the analysis of the second attribute of that sample. During this fourth cycle B, the sample in dilution vessel #1 is re-sampled into as many reaction vessels as necessary. After all the re-sampling operations from dilution vessel #1 are complete for as many sample attributes for analysis as necessary, the sample contained in dilution vessel #18 is then re-sampled during as many subsequent cycles B as there are attributes of the sample to be analyzed.

### [In the case of biochemical analysis in which samples, after diluted, need be left untreated for a certain amount of time or heated at a fixed temperature as a pretreatment, e.g., analysis of Hb_{Alc} (glycosylated hemoglobin) in which samples needs hemolytic treatment as a pretreatment]

In such a case, the operations performed for a particular dilution vessel placed on the dilution disk 4 proceed in the following order.
Sampling → Diluent dispensing → Stirring → Leaving the sample untouched or heating it → Re-sampling → Standby for reanalysis → Rinsing

When a sample diluted in cycle A needs to be left untreated or heated at a fixed temperature for a certain amount of time, that sample is re-sampled into a reaction vessel in the next cycle B that comes right after the passage of that amount of time.

Wherever on the dilution disk 4 the diluted sample is located, it is transferred to the re-sampling position d during the above cycle B. This movement of the sample is prompted by software which controls the time to be allocated to the sample up until re-sampling.

As shown in FIG. 5, during cycles A, pretreatment operations are continuously performed on dilution vessels one after another. During cycles B, however, no re-sampling operation is performed until a predetermined amount of incubation time passes, or until a diluted sample is ready for re-sampling.

For example, after the sample dispensed into dilution vessel #1 is subjected to a stirring operation, it is heated at a fixed temperature for a certain amount of time. If that amount of time is two minutes, the sample is re-sampled in the next cycle B that comes immediately after the passage of two minutes (two minutes might include several cycles A and B). Until this cycle B, no operation is performed during the preceding cycles B.

### 1-2. Movement of dilution vessels during cycle A

As shown in FIG. 13, if the movement of the dilution disk 4 associated with cycles B is ignored, it can be seen that the dilution disk 4 rotates unidirectionally (counterclockwise) in a stepped manner during cycles A such that a particular dilution vessel moves to the position of the Nth dilution vessel which is away counterclockwise from that dilution vessel. Also, in this preferred embodiment, when a particular dilution vessel completes a 360-degree rotation, the next dilution vessel to be subjected to a series of pretreatments is the dilution vessel that is counterclockwise-adjacent to that dilution vessel. The number of dilution vessels to be subjected to pretreatment during each cycle A is determined such that it shares a common factor, except 1, with the number of all the dilution vessels on the dilution disk. Based on the determined number, sampling, diluent dispensing, stirring, and rinsing are performed for that number of dilution vessels at respective positions.

### 1-3. Movement of dilution vessels during cycle B

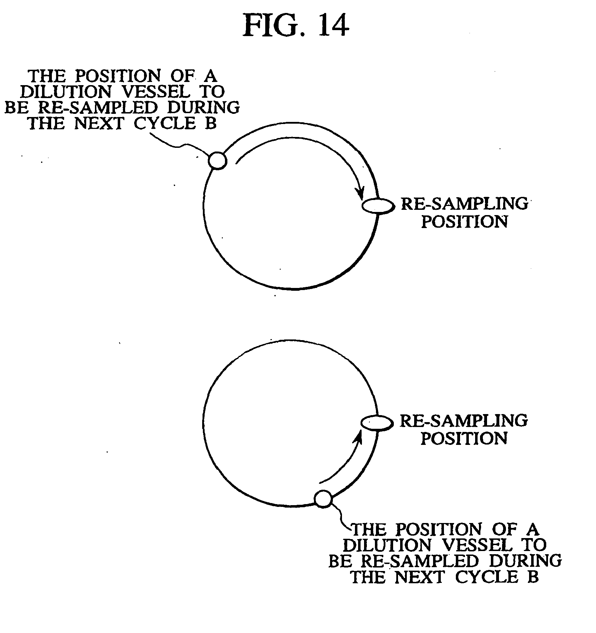

The dilution disk 4 during cycles B does not rotate until a sample is diluted and becomes ready for re-sampling. When the sample is ready, it is transferred during the next cycle B to the re-sampling position d, as shown in FIG. 14, wherever on the dilution disk 4 it is located during the previous cycle A. That is, the distances traveled by dilution vessels during that time differ from vessel to vessel. Further, in such cases, the dilution disk 4 is to select a clockwise or counterclockwise rotation, whereby the transfer time of a dilution vessel can be shortened.

As stated above, the dilution disk 4 does not rotate during cycles B until a sample is available for re-sampling. In such a case, a dilution vessel can also be rinsed.

### 2. Process flow of a particular dilution vessel

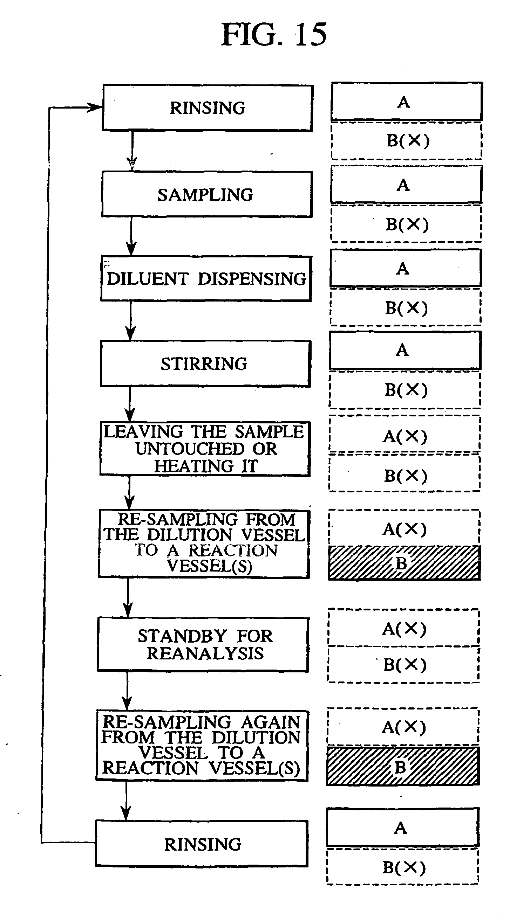

In a biochemical analysis in which samples, after diluted, need to be left untreated for a certain amount of time or heated at a fixed temperature, a particular dilution vessel undergoes the following treatments in the following order, as is also shown in FIG. 15.
· During a cycle A, an original sample is sampled into that particular dilution vessel, which has been rinsed during the previous cycle A.
· During the cycle B that follows the above cycle A, because a re-sampling operation is being performed on another dilution vessel, the particular dilution vessel may be located at any position except the re-sampling position and is subjected to no re-sampling operation. This state of cycle B in which the particular dilution vessel is subjected to no re-sampling operation is hereinafter denoted by the symbol B (x).
· During the next cycle A, a diluent is dispensed into the particular dilution vessel.
· B (×)
· During the next cycle A, the sample and diluent is stirred in the particular dilution vessel.
· B (×)
· During the next cycle A, since the particular dilution vessel needs to be left untouched for a certain amount of time or heated at a fixed temperature, it is not subjected to any of the basic pretreatment operations, and it is moved by a certain amount of distance because other dilution vessels are also moved for their respective pretreatments. This state of cycle A in which the particular dilution vessel is not subjected to any basic pretreatment operation is hereinafter denoted by the symbol A (x).
· The states of B (×) and A (x) are repeated until a predetermined amount of time elapses for the sample in the particular dilution vessel to be ready for re-sampling.
· During the next cycle B that comes right after the passage of the predetermined amount of time, the particular dilution vessel is moved to the re-sampling position, where the sample in the particular dilution vessel is re-sampled into a reaction vessel.
· A (x)
· During the next cycle B, the particular dilution vessel is subjected again to re-sampling operations for the analysis of the second attribute of the sample.
· Thereafter, the particular dilution vessel is put on standby for reanalysis. Also during the standby period, the states of A (×) and B (x) are repeated.
· When the analysis section of the automated analyzer requires a reanalysis of the sample contained in the particular dilution vessel, the particular dilution vessel is moved to the re-sampling position for re-sampling during the next cycle B that comes right after that request of the analysis section.
· When the analysis section does not require a further analysis of the sample contained in the particular dilution vessel, the particular dilution vessel is rinsed during the next cycle A.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. An automated analyzer comprising:
a sample vessel for containing a sample therein;
a plurality of pretreatment vessels in which a sample is subjected to pretreatments;
a reaction vessel in which a sample is reacted with a reagent;
a pretreatment mechanism for performing the pretreatments when necessary on a sample before the sample is transferred from the sample vessel to the reaction vessel, the pretreatment mechanism having a pretreatment-vessel transfer mechanism for circulating the plurality of pretreatment vessels on a closed track; wherein while circulating the plurality of pretreatment vessels on the closed track, the pretreatment-vessel transfer mechanism alternates a first cycle during which a sample is transferred from the sample vessel to one of the plurality of pretreatment vessels and a second cycle during which a sample that completed the pretreatments is transferred from one of the plurality of pretreatment vessels to the reaction vessel; and
control means for controlling the pretreatment-vessel transfer mechanism such that the pretreatment-vessel transfer mechanism transfers a predetermined number of the plurality of pretreatment vessels on the closed track during the first cycle and such that the pretreatment-vessel transfer mechanism operates the second cycle when a sample that completed the pretreatments is in one of the plurality of pretreatment vessels.

2. The automated analyzer defined in claim 1,
wherein the pretreatment-vessel transfer mechanism alternates the first cycle and the second cycle.

3. The automated analyzer defined in claim 1,
wherein the pretreatment-vessel transfer mechanism is a sample pretreatment disk or carousel that arranges the plurality of pretreatment vessels on the circumference thereof.

4. The automated analyzer defined in claim 1,
wherein the pretreatments include dilution of a sample or pretreatments other than the dilution,
and wherein in the case of a pretreatment other than the dilution, the control means controls the pretreatment-vessel transfer mechanism such that a sample subjected to the pretreatment is transferred to the reaction vessel during the second cycle that comes right after the passage of a predetermined amount of time allocated for the pretreatment.

5. The automated analyzer defined in claim 1,
wherein the control means controls the pretreatment-vessel transfer mechanism such that a sample that has been subjected to the pretreatments in one of the plurality of pretreatment vessels placed on the pretreatment-vessel transfer mechanism and transferred partially into the reaction vessel is kept in the one of the plurality of pretreatment vessels until analysis results are confirmed.

6. The automated analyzer defined in claim 1,
wherein the control means controls the pretreatment-vessel transfer mechanism such that during the transition from the first cycle to the second cycle, the transfer of one of the plurality of pretreatment vessels in which a sample has been subjected to the pretreatments takes the shortest route on the pretreatment-vessel transfer mechanism from the position of the one of the plurality of pretreatment vessels to a pretreated-sample transfer position at which the sample is transferred into the reaction vessel.
